# EUROPÄISCHE PATENTSCHRIFT

(11) **EP 2 139 297 B1**
(45) Veröffentlichungstag und Bekanntmachung des Hinweises auf die Patenterteilung: **03.11.2010**
(21) Anmeldenummer: 08159173.7
(22) Anmeldetag: 27.06.2008
(51) Int. Cl.: H05B 33/08

(54) **Ansteuereinrichtung für eine Halbleiterlichtquelle**
Control device for a semiconductor light source
Dispositif de commande pour une source lumineuse semi-conductrice

(43) Veröffentlichungstag der Anmeldung: 30.12.2009
(73) Patentinhaber: Hella KGaA Hueck & Co., 59552 Lippstadt (DE)
(72) Erfinder: Marxmeier, Ulrich, 89134 Blaustein (DE); Fark, Thomas, 59556 Lippstadt (DE)

(56) Entgegenhaltungen:
- WO-A-2004/057924
- WO-A-2005/022957
- US-A1- 2007 222 390
- US-B1- 6 349 023

## Beschreibung

Die Erfindung betrifft eine Ansteuereinrichtung für mindestens eine Halbleiterlichtquelle, mit einer Stromquelle, die einen mit einem ersten Stromversorgungsanschluss für die Halbleiterlichtquelle verbundenen ersten Stromquellenanschluss und einen mit einem zweiten Stromversorgungsanschluss für die Halbleiterlichtquelle verbunden zweiten Stromquellenanschluss aufweist.

Eine derartige Ansteuereinrichtung für eine Halbleiterlichtquelle mit mehreren in Reihe geschaltete Leuchtdioden, die als Leuchtmittel für einen Scheinwerfer eines Kraftfahrzeugs dienen, ist aus der Praxis bekannt. In die Ansteuereinrichtung ist ein aufwärts konvertierender Spannungs-Strom-Wandler integriert, über den die Leuchtdioden mit Strom versorgt werden. Der Spannungs-Strom-Wandler hat eine Induktivität und einen getakteten Halbleiterschalter, über den die Induktivität periodisch mit der Batterie des Kraftfahrzeugs verbindbar ist. Das Puls-Pausenverhältnis des Halbleiterschalters wird entsprechend dem für den Betrieb der Leuchtdioden benötigten Strom eingestellt. Die Ansteuereinrichtung hat den Nachteil, dass beim Auftreten eines Fehlers, durch den der Lastwiderstand am Stromversorgungsanschluss unter einen zulässigen Mindestwert abfällt, in der Ansteuereinrichtung und/oder den Leuchtdioden ein hoher elektrischer Strom auftreten kann, durch den die Ansteuereinrichtung und/oder die Leuchtdioden thermisch zerstört wird. Ein solcher Fehler kann beispielsweise bei einem Kurzschluss auftreten, durch den eine oder mehrere Leuchtdioden überbrückt werden. Bei der Reparatur des Fehlers muss dann in der Regel die komplette Leuchtdiodenreihe und/oder die Ansteuereinrichtung erneuert werden, wodurch relativ hohe Kosten entstehen.

US 2007/222390 A1 zeigt eine Vorrichtung nach der Präambel von Anspruch 1.

Es besteht deshalb die Aufgabe, eine Ansteuereinrichtung der eingangs genannten Art zu schaffen, bei der die Ansteuereinrichtung und die Halbleiterlichtquelle auch dann vor Überlastung geschützt sind, wenn an den Stromversorgungsanschlüssen aufgrund eines Fehlers ein zu geringer Lastwiderstand anliegt.

Diese Aufgabe wird dadurch gelöst, dass der erste Stromquellenanschluss über eine Schutzschaltung mit einem ersten Stromversorgungsanschluss für die Halbleiterlichtquelle verbunden ist, dass die Schutzschaltung einen p-Kanal-FET aufweist, der mit seiner Source mit dem ersten Stromquellenanschluss und mit seiner Drain mit dem ersten Stromversorgungsanschluss verbunden ist, und dass die Ansteuereinrichtung eine Referenzspannungsquelle aufweist, die einen mit dem Gate des p-Kanal-FET verbundenen ersten Referenzspannungsanschluss und einen mit dem zweiten Stromversorgungsanschluss verbundenen zweiten Referenzspannungsanschluss hat.

In vorteilhafter Weise reduziert sich die zwischen dem Referenzspannungsanschluss und der Source anliegende elektrische Spannung, wenn bei konstantem Ausgangsstrom der zwischen den Stromversorgungsanschlüssen anliegende Lastwiderstand aufgrund eines Fehlers abnimmt. Sobald die Gate-Source-Spannung einen durch die Kennlinie bzw. die Abschnürspannung des p-Kanal-FET vorgegebenen Wert unterschreitet, geht der p-Kanal-FET in den linearen Betrieb über. Dadurch tritt an der Source-Drain-Strecke ein erhöhter Spannungsabfall auf. Der Gesamtwiderstand, bestehend aus dem Widerstand der Source-Drain-Strecke und dem damit in Reihe geschalteten Lastwiderstand bleibt dabei in etwa konstant, so dass sich für die Stromquelle durch den Fehler praktisch keine Änderung ergibt. Durch die Schutzschaltung wird insbesondere vermieden, dass bei einem Kurzschluss zwischen den Stromversorgungsanschlüssen die elektrische Spannung zwischen den Stromquellenanschlüssen zu stark abnimmt. Die Schutzschaltung reagiert sehr schnell auf einen Spannungsabfall an der Halbleiterlichtquelle, weil eine thermische Erwärmung für die Reaktion der Schutzschaltung nicht benötigt wird. Somit ist auch im Fehlerfall ein stabiler, überlastfreier Betrieb der Ansteuereinrichtung und der Halbleiterlichtquelle gewährleistet. Die Schutzschaltung kann mit Standard-Bauteilen kostengünstig realisiert werden.

Bei einer bevorzugten Ausführungsform der Erfindung ist der p-Kanal-FET vom selbstsperrendenden Typ. Die Ausgangsspannung der Referenzspannungsquelle kann dann mit der Bordspannung der Batterie bzw. der Lichtmaschine des Fahrzeugs übereinstimmen.

Vorteilhaft ist, wenn die Stromquelle einen getakteten Spannungs-Strom-Wandler aufweist. Die zwischen den Stromversorgungsanschlüssen anliegende elektrische Spannung kann dann höher sein als die Bordspannung des Kraftfahrzeugs, so dass eine entsprechend große Anzahl von Halbleiterlichtquellen in Reihe geschaltet sein kann.

Bei einer bevorzugten Ausgestaltung der Erfindung weist der Spannungs-Strom-Wandler eine Spannungsquelle mit einem ersten Pol und einem zweiten Pol auf, wobei der erste Pol über eine Induktivität und einen Gleichrichter mit der Source und der zweite Pol mit dem zweiten Stromversorgungsanschluss verbunden ist, und wobei der Spannungs-Strom-Wandler Mittel zum getakteten Ansteuern der Induktivität aufweist. Dadurch ergibt sich eine kostengünstige und robuste Ansteuereinrichtung, bei der die Stromversorgungsanschlüsse über die Induktivität galvanisch leitend mit den Stromquellenanschlüssen verbunden sind.

Vorteilhaft ist, wenn die Ansteuereinrichtung eine Fehlererkennungseinrichtung hat, die Mittel zur Messung des Spannungsabfalls zwischen Drain und Source aufweist. In Abhängigkeit von dem gemessenen Spannungsabfall kann dann beispielsweise eine Fehleranzeige angesteuert und/oder eine Fehlermeldung in einem Speicher abgelegt werden. Außerdem besteht die Möglichkeit, dass beim Detektieren eines Fehler bestimmte Funktionen des Kraftfahrzeugs aktiviert und/oder gesperrt werden. So ist es beispielsweise denkbar, dass beim Detektieren eines Fehlers anstelle der defekten Halbleiterlichtquelle ersatzweise eine andere Halbleiterlichtquelle eingeschaltet wird.

Bei einer Weiterbildung der Erfindung ist in dem Stromkreis zwischen Drain und dem zweiten Stromversorgungsanschluss ein Unterbrecher mit der Halbleiterlichtquelle in Reihe geschaltet und/oder zu der der Halbleiterlichtquelle parallel geschaltet, wobei der Unterbrecher zur Pulsweitenmodulation der Halbleiterlichtquelle mit einem Taktgeber ist Steuerverbindung steht. Durch Verändern des Puls-Pausenverhältnisses kann dann die mittlere Helligkeit der Halbleiterlichtquelle eingestellt werden, beispielsweise um die Halbleiterlichtquellen an veränderte Umgebungsbedingungen anzupassen.

Vorteilhaft ist, wenn zwischen Gate und Source eine Spannungsbegrenzungseinrichtung, insbesondere eine Diode angeordnet ist. Dadurch wird vermieden, dass im Fehlerfall und/oder im Bordnetz auftretende Spannungsspitzen den p-Kanal-FET beschädigen können.

Nachfolgend sind Ausführungsbeispiele der Erfindung anhand der Zeichnung näher erläutert. Es zeigt:
- Fig. 1: ein erstes Ausführungsbeispiel einer Ansteuereinrichtung für eine Halbleiter- lichtquelle,
- Fig. 2: eine graphische Darstellung der elektrischen Spannungen an einem Feldef- fekttransistor der Ansteuereinrichtung, wobei auf der Abszisse die Zeit t in Mil- lisekunden und auf der Ordinate die Spannung in Volt aufgetragen ist, und
- Fig. 3: ein zweites Ausführungsbeispiel der Ansteuereinrichtung.

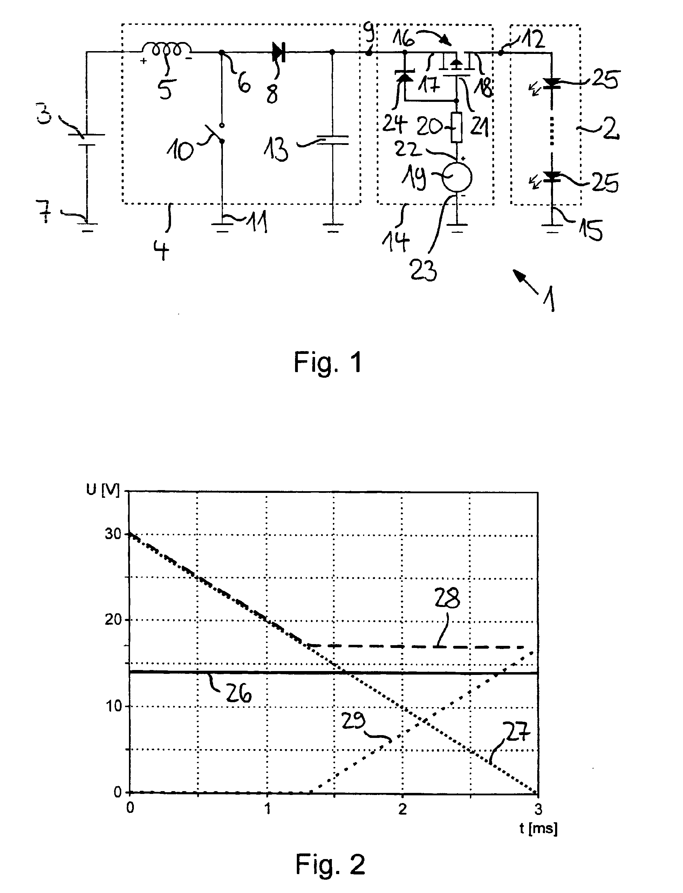

Eine in Fig. 1 im Ganzen mit 1 bezeichnete Ansteuereinrichtung für eine Halbleiterlichtquelle 2 hat eine Stromquelle, die eine Batterie 3 und einen getakteten Spannungs-Strom-Wandler 4 aufweist. Ein erster Pol der Batterie 3 ist über eine Induktivität 5 mit einem ersten Knotenpunkt 6 verbunden. Ein Zweiter Pol der Batterie 3 ist an einem Masseanschluss 7 angeschlossen.

Der erste Knotenpunkt 6 ist über einen Gleichrichter 8 mit einem ersten Stromquellenanschluss 9 und über einen Halbleiterschalter 10 mit dem Masseanschluss 7 verbunden. Der Halbleiterschalter 10 wird mittels eines in der Zeichnung nicht näher dargestellten Zeitgebers getaktet, um an die Induktivität 5 periodisch die Batteriespannung der Batterie 3 anzulegen. Ein zweiter Stromquellenanschluss 11 ist durch einen Massekontakt gebildet. Zwischen dem zweiten Stromquellenanschluss 11 und dem ersten Stromquellenanschluss 9 ist ein Glättungskondensator 13 angeordnet.

Der erste Stromquellenanschluss 9 ist über eine Schutzschaltung 14 mit einem ersten Stromversorgungsanschluss 12 für die Halbleiterlichtquelle 2 verbunden. Ein zweiter Stromversorgungsanschluss 15 für die Halbleiterlichtquelle 2 liegt auf Massepotential.

Die Schutzschaltung 14 weist einen p-Kanal-FET 16 auf, der mit seiner Source 17 mit dem ersten Stromquellenanschluss 9 und mit seiner Drain 18 mit dem ersten Stromversorgungsanschluss 12 verbunden ist.

Die Schutzschaltung 14 hat außerdem eine Referenzspannungsquelle 19, die einen über einen Gatewiderstand 20 mit dem Gate 21 des p-Kanal-FET 16 verbundenen ersten Referenzspannungsanschluss 22 und einen mit dem zweiten Stromversorgungsanschluss 15 verbundenen zweiten Referenzspannungsanschluss 23 hat. Zwischen dem Gatewiderstand 20 und dem Gate 21 ist ein zweiter Knotenpunkt angeordnet, der über eine Zener-Diode 24 mit der Source 17 verbunden ist.

Die Halbleiterlichtquelle 2 hat jeweils mehrere in Reihe geschaltete Leuchtdioden 25, von denen in der Zeichnung nur zwei dargestellt sind.

In Fig. 2 ist erkennbar, dass am Gate 21 eine konstante Referenzspannung 26 anliegt, die etwa der Batteriespannung entspricht. Bei einer durch einen Fehler verursachten Reduzierung des Lastwiderstands zwischen den Stromversorgungsanschlüssen 12, 15 nimmt die zwischen Drain 18 und Massepotential anliegende Drain-Spannung 27 ab. Die Source-Spannung 28 stimmt zunächst in etwa mit der Drain-Spannung 27 überein. Sobald die Drain-Spannung 27 einen vorbestimmten Wert, der etwa 17 V beträgt, unterschritten hat, tritt zwischen Source 17 und Drain 18 ein Spannungsabfall 29 auf und der p-Kanal-FET 16 wird im linearen Bereich betrieben. Deutlich ist erkennbar, dass im linearen Bereich die Source-Spannung 28 trotz der Reduzierung des Lastwiderstands in etwa konstant bleibt.

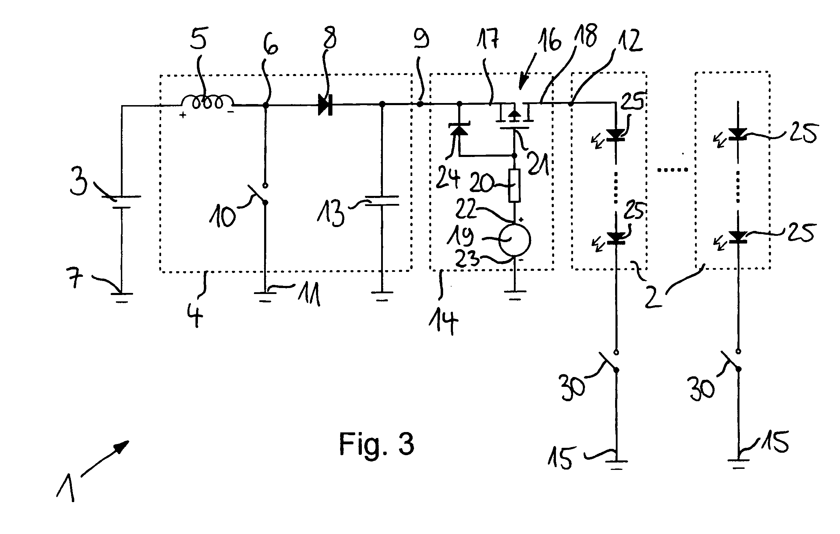

Bei dem in Fig. 3 gezeigten Ausführungsbeispiel stimmen die Batterie 3, der Spannungs-Strom-Wandler 4 und die Schutzschaltung 14 mit den entsprechenden Komponenten in Fig. 1 überein. Zusätzlich ist in Fig. 3 im Stromkreis zwischen Drain 18 und dem zweiten Stromversorgungsanschluss 15 ein Unterbrecher 30 mit der Halbleiterlichtquelle 2 in Reihe geschaltet. Der Unterbrecher 30 steht zur Pulsweitenmodulation der Halbleiterlichtquelle 2 mit einem in der Zeichnung nicht näher dargestellten Taktgeber ist Steuerverbindung.

Außerdem ist in Fig. 3 erkennbar, dass an den Stromversorgungsanschlüssen 12, 15 auch mehrere Halbleiterlichtquellen 2 parallel zueinander betrieben werden können. Dabei ist es sogar möglich, dass jede Halbleiterlichtquelle 2 einen eigenen Unterbrecher 30 aufweist und dass die Unterbrecher 30 ggf. unterschiedlich getaktet werden.

## Patentansprüche

1. Ansteuereinrichtung (1) für mindestens eine Halbleiterlichtquelle (2), mit einer Stromquelle, die einen mit einem ersten Stromversorgungsanschluss (12) für die Halbleiterlichtquelle (2) verbundenen ersten Stromquellenanschluss (9) und einen mit einem zweiten Stromversorgungsanschluss (15) für die Halbleiterlichtquelle (2) verbunden zweiten Stromquellenanschluss (11) aufweist, wobei der erste Stromquellenanschluss (9) über eine Schutzschaltung (14) mit einem ersten Stromversorgungsanschluss (12) für die Halbleiterlichtquelle (2) verbunden ist, **dadurch gekennzeichnet, dass** die Schutzschaltung (14) einen p-Kanal-FET (16) aufweist, der mit seiner Source (17) mit dem ersten Stromquellenanschluss (9) und mit seiner Drain (18) mit dem ersten Stromversorgungsanschluss (12) verbunden ist, und dass die Ansteuereinrichtung (1) eine Referenzspannungsquelle (19) aufweist, die einen mit dem Gate (21) des p-Kanal-FET (16) verbundenen ersten Referenzspannungsanschluss (22) und einen mit dem zweiten Stromversorgungsanschluss (15) verbundenen zweiten Referenzspannungsanschluss (23) hat.

2. Ansteuereinrichtung (1) nach Anspruch 1, **dadurch gekennzeichnet, dass** der p-Kanal-FET (16) vom selbstsperrendenden Typ ist.

3. Ansteuereinrichtung (1) nach Anspruch 1 oder 2, **dadurch gekennzeichnet, dass** die Stromquelle einen getakteten Spannungs-Strom-Wandler (4) aufweist.

4. Ansteuereinrichtung (1) nach einem der Ansprüche 1 bis 3, **dadurch gekennzeichnet, dass** der Spannungs-Strom-Wandler (4) eine Spannungsquelle (3) mit einem ersten Pol und einem zweiten Pol aufweist, dass der erste Pol über eine Induktivität (5) und einen Gleichrichter (8) mit der Source (17) und der zweite Pol mit dem zweiten Stromversorgungsanschluss (15) verbunden ist, und dass der Spannungs-Strom-Wandler (4) Mittel zum getakteten Ansteuern der Induktivität (5) aufweist.

5. Ansteuereinrichtung (1) nach einem der Ansprüche 1 bis 4, **dadurch gekennzeichnet, dass** sie eine Fehlererkennungseinrichtung hat, die Mittel zur Messung des Spannungsabfalls zwischen Drain (18) und Source (17) aufweist.

6. Ansteuereinrichtung (1) nach einem der Ansprüche 1 bis 5, **dadurch gekennzeichnet, dass** in dem Stromkreis zwischen Drain (18) und dem zweiten Stromversorgungsanschluss (15) ein Unterbrecher (30) mit der Halbleiterlichtquelle (2) in Reihe geschaltet und/oder zu der der Halbleiterlichtquelle (2) parallel geschaltet ist, und dass der Unterbrecher (30) zur Pulsweitenmodulation der Halbleiterlichtquelle (2) mit einem Taktgeber ist Steuerverbindung steht.

7. Ansteuereinrichtung (1) nach einem der Ansprüche 1 bis 6, **dadurch gekennzeichnet, dass** zwischen Gate (21) und Source (17) eine Spannungsbegrenzungseinrichtung, insbesondere eine Diode (24) angeordnet ist.

## Claims

1. Control device (1) for at least one semi-conductor light source (2), with a power-source that has a first power-source junction (9) connected to a first power-supply junction (12) for the semi-conductor light source (2) and a second power-source junction (11) connected to a second power-supply junction (15) for the semi-conductor light source (2), with the first power-source junction (9) being connected to a first power-supply junction (12) via a protective circuit (14) for the semi-conductor light source (2), **characterized in that** the protective circuit (14) has a P-channel FET (16) that is connected to the first power-source junction (9) with its source (17) and to the first power-supply junction (12) with its drain (18) and that the control device (1) has a reference voltage source (19) that has a first reference voltage junction (22) connected to the gate (21) of the p-channel FET (16) and a second reference voltage junction (23) connected to the second power-supply junction (15).

2. Control device (1) following claim 1, **characterized in that** the p-channel FET (16) is of self-locking type.

3. Control device (1) following claim 1 or 2, **characterized in that** the power source has a clocked voltage-to-current converter (4).

4. Control device (1) following one the claims 1 to 3, **characterized in that** the voltage-to-current converter (4) has a voltage source (3) with a first terminal and a second terminal, that the first terminal is connected to the source (17) via inductance (5) and a rectifier (8) and the second terminal is connected to the second power-supply junction (15), and that the voltage-to-current converter has means for clocked controlling of inductance (5).

5. Control device (1) following one of the claims 1 to 4, **characterized by** comprising a defect-detection feature having means for measuring the voltage drop between drain (18) and source (17).

6. Control device (1) following one of the claims 1 to 5, **characterized in that** a breaker (30) is connected in series with the semi-conductor light source (2) and/or connected in parallel to the semi-conductor light source (2) in the electric circuit between drain (18) and the second power-supply junction (15), and that the breaker (30) is in control connection with a clock generator with regard to pulse-width modulation of the semi-conductor light source (2).

7. Control device (1) following one of the claims 1 to 6, **characterized in that** a voltage limitation feature, especially a diode (24), is arranged between gate (21) and source (17).

## Revendications

1. Installation de commande (1) pour au moins une source de lumière semi-conductrice (2) avec une source de courant qui présente un premier raccordement à la source de courant (9) relié à une première alimentation électrique (12) pour la source de lumière semi-conductrice (2) et un deuxième raccordement à la source de courant (11) relié à une deuxième alimentation électrique (15) pour la source de lumière semi-conductrice (2), le premier raccordement à la source de courant (9) est relié au moyen d'un circuit de protection (14) à une première alimentation électrique (12) pour la source de lumière semi-conductrice (2), **caractérisée en ce que** le circuit de protection (14) présente un transistor à effet de champ à canal p (16) qui est relié avec sa source (17) au premier raccordement à la source de courant (9) et avec son drain (18) à la première alimentation électrique (12) et que l'installation de commande (1) présente une source de tension de référence (19) qui possède un premier raccordement à la tension de référence (22) relié à la grille (21) du transistor à effet de champ à canal p (16) et un deuxième raccordement à la tension de référence (23) relié à la deuxième alimentation électrique (15).

2. Installation de commande selon la revendication 1, **caractérisée en ce que** le transistor à effet de champ à canal p (16) est du type autobloquant.

3. Installation de commande selon la revendication 1 ou 2, **caractérisée en ce que** la source de courant présente un convertisseur tension/courant cadencé (4).

4. Installation de commande selon une des revendications 1 à 3, **caractérisée en ce que** le convertisseur tension/courant (4) présente une source de tension (3) avec une première borne et une deuxième borne et que la première borne est reliée à la source (17) par une inductance (5) et un redresseur (8) et la deuxième borne est reliée à la deuxième alimentation électrique (15) et que le convertisseur tension/courant (4) présente des moyens à commander l'inductance (5) de manière cadencée.

5. Installation de commande selon une des revendications 1 à 4, **caractérisée en ce qu'**elle présente une installation à détection d'erreurs qui possède des moyens à mesurer la chute de tension entre drain (18) et source (17).

6. Installation de commande selon une des revendications 1 à 5, **caractérisée en ce qu'**au circuit électrique entre le drain (18) et la deuxième alimentation électrique (15) se trouve un interrupteur (30) connecté en série à la source de lumière semi-conductrice (2) et/ou en parallèle à la source de lumière semi-conductrice (2) et que l'interrupteur (30) se trouve en connexion de commande avec un générateur de cadence en vue de la modulation d'impulsions en largeur de la source de lumière semi-conductrice (2) .

7. Installation de commande selon une des revendications 1 à 6, **caractérisée en ce qu'**une installation à limitation de tension, notamment une diode (24), se trouve entre la grille (21) et la source (17).
